(19) Europäisches Patentamt
European Patent Office
Office européen des brevets

(11) EP 1 409 245 B1

(12) **EUROPEAN PATENT SPECIFICATION**

(45) Date of publication and mention of the grant of the patent:
**23.08.2006 Bulletin 2006/34**

(21) Application number: **02751113.8**

(22) Date of filing: **02.07.2002**

(51) Int Cl.:
***B32B 27/32*** (2006.01) ***F16L 9/12*** (2006.01)
***F16L 47/00*** (2006.01) ***C08J 5/18*** (2006.01)
***B67D 5/00*** (2006.01) ***B67D 1/00*** (2006.01)
***B65D 65/40*** (2006.01)

(86) International application number:
**PCT/EP2002/007491**

(87) International publication number:
**WO 2003/004207 (16.01.2003 Gazette 2003/03)**

(54) **GLOSSY TUBES AND PIPES**

GLÄNZENDE ROHRE UND SCHLÄUCHE

TUBES ET TUYAUX BRILLANTS

(84) Designated Contracting States:
**AT BE BG CH CY CZ DE DK EE ES FI FR GB GR IE IT LI LU MC NL PT SE SK TR**

(30) Priority: **04.07.2001 EP 12025730**
**05.07.2001 EP 12025771**

(43) Date of publication of application:
**21.04.2004 Bulletin 2004/17**

(73) Proprietor: **TOTAL PETROCHEMICALS RESEARCH FELUY**
**7181 Seneffe (Feluy) (BE)**

(72) Inventors:
- **MARECHAL, Philippe**
**B-1400 Nivelles (BE)**
- **MAZIERS, Eric**
**B-7180 Seneffe (BE)**

(74) Representative: **Roufosse, Micheline C.**
**Total Petrochemicals Research Feluy**
**Zone Industrielle C**
**7181 Seneffe (Feluy) (BE)**

(56) References cited:

| | |
|---|---|
| **EP-A- 0 597 502** | **EP-A- 0 687 558** |
| **EP-A- 0 701 897** | **EP-A- 0 733 472** |
| **EP-A- 0 756 931** | **WO-A-96/19527** |
| **US-A- 4 374 227** | **US-A- 5 443 098** |
| **US-A- 5 707 088** | **US-A- 6 153 716** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 409 245 B1

## Description

This invention is related to the production of high gloss sheets, pipes, tubes or connector joints and in particular to the production of high gloss tubes or hollow items formed of metallocene-produced polyethylene.

Several methods have been sought to produce high gloss tubes, hollow items and pipes presenting good processability and good mechanical properties but all the blends and techniques used so far present various disadvantages.

High gloss high density polyethylene (HDPE) has been used: it is characterised by a very narrow molecular weight distribution that is typically inferior to 8. The molecular weight distribution can be completely defined by means of a curve obtained by gel permeation chromatography. Generally, the molecular weight distribution (MWD) is more simply defined by a parameter, known as the dispersion index D, which is the ratio between the average molecular weight by weight (Mw) and the average molecular weight by number (Mn). The dispersion index constitutes a measure of the width of the molecular weight distribution. It is known that a resin of narrow molecular weight distribution will produce plastic articles of very high gloss but simultaneously, that such resin will be very difficult to process and will be characterised by very poor mechanical properties. It has also been observed that said resins have poor mechanical properties, particularly, a very low environmental stress crack resistance (Modem Plastic international, August 1993, p. 45).

Low density polyethylene (LDPE) and polyethylene vinyl acetate (EVA) copolymers are used to prepare articles with very smooth surface finish and thus high gloss but they suffer from a lack of rigidity, thereby requiring thick walls if used for pressurised fluids. The polyethylene materials that offer high rigidity are characterised by a fairly rough surface resulting from the surface crystallisation of the polymer. The articles produced with these polymers thus have a mat finish.

The coextrusion of high density polyethylene (HDPE) with a thin external layer of polyamide has been used to prepare products of very high gloss but that method suffers the major drawback of necessitating an adhesive layer between the HDPE and the polyamide layers.

The coextrusion of high density polyethylene and an external layer of low density polyethylene leads to products with a fair gloss. These articles however have an unpleasant greasy touch and offer a very poor resistance to scratching.

Alternatively, blends of low density polyethylene (LDPE) and linear low density polyethylene (LLDPE) have been used. The low density polyethylene has a broad molecular weight distribution and provides good processability but has a very low environmental stress crack resistance (ESCR). The linear low density polyethylene has a very narrow molecular weight distribution, a very high melt fracture sensitivity and is impossible to process alone but it has a favourable ESCR. It is thus necessary to use blends in order to obtain the desired mechanical properties and easy processing.

In another method, high gloss plastic articles comprise an internal layer including a polyolefin and an external layer including a styrenic component containing from 40 to 85 wt% of styrene, based on the weight of the external layer, as disclosed for example in EP-A-1138604.

Medium density polyethylene pipe blends are disclosed in US-A-4,374,227. The pipes are composed of a high density ethylene polymer, a low pressure, low density alkylene polymer and a carbon black concentrate wherein the carrier in said concentrate is a low pressure, low density alkylene interpolymer. The pipes prepared from such composition have improved low temperature brittleness and enhanced gloss.

There is thus a need for a method for efficiently producing plastic sheets or pipes or tubes or hollow items or connector joints of very high gloss as well as good processability and good mechanical properties.

An aim of the present invention is to produce plastic sheets or pipes or tubes or connector joints or hollow items that offer simultaneously the desired glossy appearance and a high rigidity.

It is also an aim of the present invention to obtain glossy plastic sheets or pipes or tubes or connector joints or hollow items with low extrusion pressure and good resistance to sagging.

It is another aim of the present invention to produce plastic sheets or pipes or tubes or connector joints or hollow items with good sealing potential and good ESCR.

It is a further aim of the present invention to manufacture plastic sheets or pipes or tubes or hollow items with a high extrusion output.

It is yet another aim of the present invention to provide plastic tubes or pipes or hollow items having a high flexibility.

The present invention provides single layer or multi-layer plastic sheets or pipes or tubes or connector joints or hollow items, according to claims 1 for which the external layer consists of a metallocene-produced polyethylene having a density of from 0.915 g/cm$^3$ up to 0.940 g/cm$^3$ and a melt index MI2 of from 0.5 to 2.5 g/10 min, for extrusion blow moulding, and of from 0.1 to 500 g/10 min, preferably from 0.7 to 70 g/10 min for injection blow moulding. The metallocene catalyst system is based on ethylene bis(tetrahydroindenyl) zirconium dichloride.

In this specification, the density of the polyethylene is measured at 23 °C using the procedures of ASTM D 1505.

The melt index MI2 is measured using the procedures of ASTM D 1238 at 190°C using a load of 2.16 kg. The high load melt index HLMI is measured using the procedures of ASTM D 1238 at 190 °C using a load of 21.6 kg.

When multi-layer plastic sheets or pipes or tubes are produced, the external layer is prepared with a metallocene-produced polyethylene resin, the inner layer(s) is(are) prepared with any one of the known catalysts, such as a chromium or a Ziegler-Natta or a metallocene catalyst, said metallocene catalyst being either the same as or different from the metallocene catalyst used to prepare the external layer. In certain applications, it is advantageous to have both the inner and outer layers prepared with a metallocene-produced polyethylene, either the same or different.

A number of different catalyst systems have been disclosed for the manufacture of polyethylene, in particular medium-density polyethylene (MDPE) and high-density polyethylene (HDPE) suitable for blow moulding. It is known in the art that the physical properties, in particular the mechanical properties, of a polyethylene product vary depending on what catalytic system was employed to make the polyethylene. This is because different catalyst systems tend to yield different molecular weight distributions in the polyethylene produced

It is known in the art to use chromium-based catalysts to polymerise HDPE and in particular to produce high-.density polyethylene having high resistance to environmental stress cracking. For example, EP-A-0,291,824, EP-A-0,591,968 and US-A-5,310,834 each disclose mixed catalyst compositions, incorporating chromium-based catalysts, for the polymerisation of polyethylene.

Alternatively, the HDPE and MDPE can be produced using a conventional Ziegler-Natta catalyst or a supported Ziegler-Natta catalyst comprising metallocene sites such as described in EP-A-0,585,512.

The HDPE and MDPE can further be polymerised with a metallocene catalyst capable of producing a mono- or bi- or multimodal distribution, either in a two step process such as described for example in EP-A-0,881,237, or as a dual or multiple site catalyst in a single reactor such as described for example in EP-A-0,619,325.
There are many metallocene catalysts known in the art that can be represented by the general formula:

I. $(Cp)_m\ MR_n\ X_q$

wherein Cp is a cyclopentadienyl ring, M is a group 4b, 5b or 6b transition metal, R is a hydrocarbyl group or hydrocarboxy having from 1 to 20 carbon atoms, X is a halogen, and m-1-3, n=0-3, q=0-3 and the sum m+n+q is equal to the oxidation state of the metal.

II. $(C_5R'_k)_g\ R''_s\ (C_5R'_k)\ MQ_{3-g}$

III. $R''_s\ (C_5R'_k)_2\ MQ'$

wherein $(C_5R'_k)$ is a cyclopentadienyl or substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a $C_4$-$C_6$ ring, R" is a $C_1$-$C_4$ alkylene radical, a dialkyl germanium or silicon or siloxane, or a alkyl phosphine or amine radical bridging two $(C_5R'_k)$ rings, Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other, Q' is an alkylidene radical having from 1 to about 20 carbon atoms, s is 0 or 1, g is 0, 1 or 2, s is 0 when g is 0, k is 4 when s is 1 and k is 5 when s is 0, and M is as defined above.

The metallocene used in the present invention is, ethylene bis-(tetrahydroindenyl) zirconium dichloride, as disclosed for example in EP-A-870,048.

The metallocene may be supported according to any method known in the art. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

An active site must be created by adding an activating agent having an ionising action.

Preferably, alumoxane is used as activating agent during the polymerization procedure, and any alumoxane known in the art is suitable.

The preferred alumoxanes comprise oligomeric linear and/or cyclic alkyl alumoxanes represented by the formula :

(IV) 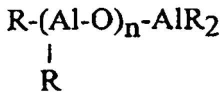

for oligomeric, linear alumoxanes
and

$$(V)\ (-\underset{R}{\underset{|}{Al}}-O-)_m$$

for oligomeric, cyclic alumoxanes,
wherein n is 1-40, preferably 10-20, m is 3-40, preferably 3-20 and R is a $C_1$-$C_8$ alkyl group and preferably methyl. Methylalumoxane is preferably used.

When alumoxane is not used as an activating agent, one or more aluminiumalkyl represented by the formula $AlR_x$ are used wherein each R is the same or different and is selected from halides or from alkoxy or alkyl groups having from 1 to 12 carbon atoms and x is from 1 to 3. Especially suitable aluminiumalkyl are trialkylaluminium, the most preferred being triisobutylaluminium (TIBAL).

The metallocene catalyst utilised to produce a polyethylene, as required for preparing the high gloss sheets or tubes or pipes or hollow items of the present invention, can be used in gas, solution or slurry polymerisation. Preferably, the polymerization process is conducted under slurry phase polymerization conditions. The polymerisation temperature ranges from 20 to 125°C, preferably from 60 to 105°C and the pressure ranges from 0.1 to 10 Mpa, preferably from 2 to 6.5 Mpa, for a time ranging from 10 minutes to 4 hours, preferably from 0.3 and 2.5 hours, most preferably from 0.5 to 1 hour.

It is preferred that the polymerization reaction be run in a diluent at a temperature at which the polymer remains as a suspended solid in the diluent.

A continuous loop reactor is preferably used for conducting the polymerisation. Multiple loop reactors can also be used for polymerisation.

The average molecular weight is controlled by adding hydrogen during polymerisation. The relative amounts of hydrogen and olefin introduced into the polymerisation reactor are from 0.001 to 15 mole percent hydrogen and from 99.999 to 85 mole percent olefin based on total hydrogen and olefin present, preferably from 0.2 to 3 mole percent hydrogen and from 99.8 to 97 mole percent olefin.

The density of the polyethylene is regulated by the amount of comonomer injected into the reactor; examples of comonomer which can be used include C3-C22 n-olefins or non conjugated diolefins among which the preferred are: 1-olefins, butene, hexene, octene, 4-methyl-pentene, and the like, the most preferred being hexene.

The densities of the polyethylenes required for preparing the high gloss sheets, tubes, hollow items or pipes of the present invention range from 0.910 $g/cm^3$, up to 0.966 $g/cm^3$, or up to homopolymer densities, preferably from 0.915 $g/cm^3$ up to 0.940 $g/cm^3$.

The melt index of polyethylene is regulated by the amount of hydrogen injected into the reactor. The melt indexes useful in the present invention range from 0.5 to 2.5 g/10 min.

The polyethylene resin used in the present invention can be prepared with either a single site metallocene catalyst or with a multiple site metallocene catalyst and it has therefore either a monomodal or a bimodal molecular weight distribution. The molecular weight distribution is of from 2 to 20, preferably, of from 2 to 7 and more preferably of from 2 to 5.

The polyethylene resins produced in accordance with the above-described processes have physical properties making them particularly suitable for use as blow moulding grade polyethylenes. In addition, it has surprisingly been observed that they have good processability even when their molecular weight distribution is narrow.

The metallocene-produced resins used in the present invention have a high level of long chain branching as indicated by a high value of the Dow Rheological Index. S.Lai et al. defined the DRI as the extent that the rheology of ethylene-octene copolymers known as ITP (Dow's Insite Technology Polyolefins) incorporating long chain branching into the polymer backbone deviates from the rheology of the conventional linear homogeneous polyolefins that are reported to have no long chain branching by the following normalized equation:

$$DRI = (365000\ (t_0/\eta_0)-1)/10$$

wherein $t_0$ is the characteristic relaxation time of the material and $\eta_0$ is the zero shear viscosity of the material (Antec '94, Dow Rheology Index (DRI) for Insite™ Technology Polyolefins (ITP): Unique structure-Processing Relationships, pp. 1814-1815). $t_0$ and $\eta_0$ are calculated by least squares fit of the rheological curve (complex viscosity versus frequency) as described in US-A-6114486 with the following generalized Cross equation,

$$\eta = \eta_0 / (1+ (\gamma t_0)^n )$$

wherein n is the power law index of the material characterising the shear thinning behaviour of the material, η and y are the measured viscosity and shear rate data respectively. The dynamic rheological analysis is performed at 190°C under nitrogen and the strain amplitude is 10%. Results are reported according to ASTM D 4440.

The DRI of the mPE used in the present invention is larger than 15.73 $(MI_2)^{-0.634}$, preferably larger than 15.73 $(MI_2)^{-0.634}$ + 50, more preferably larger than 15.73 $(MI_2)^{-0.634}$ + 100, still more preferably larger than 15.73 $(MI_2)^{-0.634}$ + 200, yet more preferably larger than 15.73 $(MI_2)^{-0.634}$ + 300.

It has been observed that the DRI value is function of the temperature at which the dynamic rheological analysis is performed. In this specification, the dynamic rheological analysis is performed at a temperature of 190°C.

The use of the metallocene-produced resin according to the present invention further allows a reduction in the wall thickness of the tubes or pipes or hollow items of from 5 to 10 %.

The metallocene polyethylene resins are used in the present invention for manufacturing high gloss plastic sheets or pipes or tubes or hollow items. The high gloss tubes or pipes or hollow items of the present invention preferably have a diameter of from 0.5 to 250 mm. Said tubes or pipes are used for various applications:

- for the transport of fluid food, such as beer or milk. The smooth high gloss inner and outer surfaces prevent the accretion of debris thereby preventing the development of bacteria.
- for flexible tubes either that can be used in hygiene and cosmetics, such as skin cream, shampoo, toothpaste, pharmaceuticals, make-up, or that can be used in household products, such as adhesives, cleaning and barrier creams. The smooth and glossy outer surface gives attractiveness for retail and the good ESCR makes their handling easy and safe.
- for medical application because it is known in the art that metallocene-produced polyethylene has a low level of extractables.
- for use instead of PVC tubing especially in the food industry because they have the required rigidity.
- for drip tapes to transport water in draining systems, because the pressure drop through the pipes remains low. The pressure drop is a function of the surface roughness: the smoother the surface, the smaller the pressure drop. This is discussed for example in "Perry's Chemical Engineers' Handbook, sixth edition, Ed. By R.H. Perry and D. Green, at pages 5-25 to 5-26.

The sheets, tubes, hollow items and pipes can be manufactured by any method known in the art such as:

- high gloss pipes can be extruded in a classical pipe extrusion line.
- thin high gloss tubes or hollow items can be extruded in blown film type machines operated at low or even fractional blow up ratio (BUR), typically at a BUR of from 0.3 to 1.5.
- high gloss tubes or hollow items may also be manufactured by the longitudinal sealing of high gloss sheets.
- connector joints can be prepared by injection moulding.

During extrusion, it is possible to incorporate fluoroelastomer in the resin allowing for very low transformation temperatures of from 140 to 180 °C, preferably, around 160 °C. Such temperatures are 30 to 40°C lower than the transformation temperature normally used.

It is also possible to produce coextruded plastic tubes or hollow items wherein the external layer is a metallocene-produced polyethylene and the internal layer is a polyethylene produced by any conventional method. The external layer represents from 5 to 14 %, preferably about 10 %, of the total wall thickness.

The plastic tubes or hollow items of the present invention are characterised by a very high gloss, as measured using the method of ASTM D 2457-90 standard test and a low haze as measured by the method of ASTM D 1003-92 standard test.

The environmental stress crack resistance (ESCR) is measured following the method of standard test ASTM D 1693 method B with a solution of 10 % Igepal C0630.

Additionally and quite surprisingly, the production rate is very high even though the melt index is low.

**Examples.**

Several polyethylene resins were prepared and tested for ESCR, rigidity, gloss and haze.

**Resin R1.**

The polyethylene resin was obtained by continuous polymerisation in a loop slurry reactor with a supported and ionised metallocene catalyst prepared in two steps by first reacting $SiO_2$ with MAO to produce $SiO_2$.MAO and then reacting 94 wt% of the $SiO_2$.MAO produced in the first step with 6 wt% of ethylene bis-(tetrahydroindenyl) zirconium dichloride. The dry catalyst was slurried in isobutane and pre-contacted with triisobutylaluminium (TIBAI, 10 wt% in hexane) before injection in the reactor. The reaction was conducted in a slurry loop reactor with the polymerisation temperature being maintained at 90°C. The operating conditions were as follows:

- TIBAI conc (ppm) : 100-200
- iC4 feed (kg/h) : 1940
- C2 feed (kg/h) : 3900
- C6 feed (g/kg C2) : 22
- H2 feed (g/t) : 42

Wherein, C2 is ethylene, C6 is 1-hexene, iC4 is isobutane and TIBAI is triisobutylaluminium.

**Resin R2.**

Comparative resin R2 is a classical medium density polyethylene (MDPE) resin produced with a chromium catalyst commercialised under the name ® Finathène HF513. It was prepared with a titanated supported chromium catalyst.

The properties of these two resins are summarised in Table I.

**TABLE I.**

| Resin | Density g/cm$^3$ | HLMI G/10' | MI2 g/10' | MWD |
|---|---|---|---|---|
| R1 | 0.934 | 25.1 | 0.96 | 2.6 |
| R2 | 0.934 | 14.5 | 0.15 | 14 |

These two resins were extruded to produce tubes on a Reifenhauser machine having a screw diameter of 70 mm and a length to diameter ratio (UD) of 25.

The properties of the tubes prepared from these two resins are summarised in Table II.

**TABLE II.**

| | R1 | R2 |
|---|---|---|
| Density | 934 g/l | 934 g/l |
| MWD | 2.6 | 14 |
| Pipe Diameter | 32 mm | 32 mm |
| Wall thickness | 3 mm | 3 mm |
| Extrusion T° | 150°C | 200°C |
| Screw speed | 20 rpm | 40 rpm |
| Extrusion P | 95 bar | 175 bar |
| Extrusion output | 24.6 kg/h | 46 kg/h |
| Output/rpm | 1.25 kg/rpm | 1.12 kg/rpm |
| Bar/(kg/h)[a] | 3.8 | 3.8 |
| Gloss at 20° | 97 | 79 |
| Gloss at 60° | 78 | 71 |
| Gloss at 85° | 17 | 15 |
| Rigidity Mpa | 720 | 725 |

(continued)

| | R1 | R2 |
|---|---|---|
| Read through possible[b] | Easy | Very difficult |
| ESCR | >900 | >900 |

[a] The expression "bar/(kg/h)" represents the specific extrusion pressure: it decreases with increasing output because the polymers are thinning when the shear pressure is increasing. If the screw speed is thus brought from 20 rpm to 40 rpm for the resin R1 according to the present invention, in order to equate the screw speed of comparative resin R2, the specific extrusion pressure will be lower than the present value of 3.8 bar/(kg/h). The specific extrusion pressure also decreases with increasing extrusion temperature; it will thus be further reduced for the resin R1 of the present invention if the extrusion temperature is raised from 150°C to 200 °C.

[b] The read through possibility is determined by placing a half pipe, cut along its longitudinal axis on a text.

It must be noted that the difference in gloss between the two resins is reduced because the measurements are not carried out on a flat surface but on the cylindrical pipe surface. The difference in gloss between the two resins is highest for low angles. Figures 1 and 2 represent photographs of the pipes prepared respectively with resins R1 and R2: they clearly show the difference in gloss between the pipes produced respectively with the two resins.

In addition, the pipes prepared with the metallocene-produced polyethylene have a good thickness distribution. They can be produced with a low extrusion pressure, the extrusion temperature is lower than that of the pipes prepared with conventional MDPE and the extrusion output is very high.

**Resin R3.**

Resin R3 is a medium density polyethylene resin prepared with ethylene bis tetrahydroindenyl zirconium dichloride.

**Resin R4.**

Comparative resin R4 is a blend of 80 wt% of LDPE and 20 wt% of LLDPE, both sold by Basell.

The two resins were used to prepare cosmetic tubes having a diameter of 50 mm and a wall thickness of 0.5 mm. They were produced with a 65 mm die and 0.8 mm die gap at a rate of 1800 s-1.

The properties or resins R3 and R4 and of the tubes prepared with these two resins are summarised in Table III.

**TABLE III.**

| Resin | R3 | LDPE | LLDPE | R4 |
|---|---|---|---|---|
| Mn | 32429 | 20610 | 28463 | 22335 |
| Mw | 84095 | 120688 | 110173 | 120508 |
| MWD | 2.6 | 5.9 | 3.9 | 5.4 |
| Density g/cm$^3$ | 0.9289 | 0.9222 | 0.9204 | 0.922 |
| MI2 g/10 min | 0.8 | 0.277 | 0.936 | 0.309 |
| HLMI g/10 min | 25.9 | 18.6 | 24.2 | 15.9 |
| Bell ESCR (10% Antarox -50°C) | No cracks up to 3500 hr | Cracks start after 500 hr | No cracks up to 1000 hr | No cracks up to 1000 hr |

(continued)

| Resin | R3 | LDPE | LLDPE | R4 |
|---|---|---|---|---|
| Bell ESCR (35% Antarox -70°C) | No cracks up to 500 hr | Cracks start after 24 hr | No cracks up to 500 hr | No cracks up to 500 hr |

The haze was of the order of 25 % for the resin R3 according to the present invention as compared to 55 % for the comparative resin R4.

## Claims

1. High gloss pipes or tubes or hollow items or connector joints, having a gloss of at least 40 and comprising one or more layers **characterised in that** the external layer is prepared from a metallocene-produced polyethylene resin having a density of from 0.915 g/cm$^3$ to 0.940 g/cm$^3$ and a melt index MI2 of from 0.5 g/10 min to 2.5 g/10 min and **characterised in that** the metallocene catalyst system is based on ethylene bis(tetrahydro-indenyl) zirconium dichloride catalyst component.

2. The high gloss pipes or tubes or hollow items or connector joints of claim 1 prepared from a single metallocene-produced polyethylene layer.

3. The high gloss pipes or tubes or hollow items or connector joints of claim 1 prepared from two or more layers and wherein the external metallocene-produced polyethylene layer represents from 5 to 14 % of the total wall thickness.

4. Use of the high gloss tubes or hollow items according to any one of claims 1 to 3 for handling fluid food products.

5. Use according to claim 4, to reduce bacterial proliferation.

6. Use of the high gloss tubes or hollow items according to any one of claims 1 to 3 for cosmetic and hygiene tubes.

7. Use of the high gloss tubes or hollow items according to any one of claims 1 to 3 for medical applications.

8. Use of the high gloss tubes or hollow items according to any one of claims 1 to 3 for replacement of PVC tubing.

## Patentansprüche

1. Hochglanz-Schläuche oder Rohre oder Hohlartikel oder Verbindungsstücke, die einen Glanz von wenigstens 40 aufweisen und eine oder mehrere Schichten aufweisen, **dadurch gekennzeichnet, dass** die Außenschicht aus einem metallocenproduzierten Polyethylenharz mit einer Dichte von 0,915 g/cm$^3$ bis 0,940 g/cm$^3$ und einem Schmelzindex MI2 von 0,5 g/10 min. bis 2,5 g/10 min. hergestellt ist, und **dadurch gekennzeichnet, dass** das Metallocenkatalysatorsystem auf Ethylen-bis(tetrahydroindenyl)zirkoniumdichlorid-Katalysatorkomponente basiert ist.

2. Die Hochglanz-Schläuche oder Rohre oder Hohlartikel oder Verbindungsstücke von Anspruch 1, hergestellt aus einer einzigen metallocenproduzierten Polyethylenschicht.

3. Die Hochglanz-Schläuche oder Rohre oder Hohlartikel oder Verbindungsstücke von Anspruch 1, hergestellt aus zwei oder mehr Schichten, und wobei die äußere metallocenproduzierte Polyethylenschicht 5 bis 14% der gesamten Wanddicke darstellt.

4. Verwendung der Hochglanzschläuche oder Hohlartikel gemäß einem der Ansprüche 1 bis 3 zur Handhabung flüssiger Lebensmittelprodukte.

5. Verwendung gemäß Anspruch 4, zur Verringerung von Bakterienwucherung.

6. Verwendung der Hochglanzschläuche oder Hohlartikel gemäß einem der Ansprüche 1 bis 3 für Kosmetik- und Hygieneschläuche.

**7.** Verwendung der Hochglanzschläuche oder Hohlartikel gemäß einem der Ansprüche 1 bis 3 für medizinische Anwendungen.

**8.** Verwendung der Hochglanzschläuche oder Hohlartikel gemäß einem der Ansprüche 1 bis 3 zum Ersatz von PVC-Schlauchmaterial.

## Revendications

**1.** Tuyaux ou tubes ou articles creux ou raccords très brillants possédant un brillant d'au moins 40 et comprenant une ou plusieurs couches, **caractérisés en ce que** la couche externe est préparée à partir d'une résine de polyéthylène produit en utilisant un métallocène, la résine possédant une densité de 0,915 g/cm$^3$ à 0,940 g/cm$^3$ et un indice de fluidité à chaud MI2 de 0,5 g/10 min à 2,5 g/10 min, et **caractérisés en ce que** le système de catalyseur de métallocène est à base d'un composant de catalyseur de dichlorure d'éthylène bis(tétrahydro-indényl) zirconium.

**2.** Tuyaux ou tubes ou articles creux ou raccords très brillants selon la revendication 1, que l'on prépare à partir d'une seule couche de polyéthylène produit en utilisant un métallocène.

**3.** Tuyaux ou tubes ou articles creux ou raccords très brillants selon la revendication 1, que l'on prépare à partir de deux couches ou plus, et dans lesquels la couche externe de polyéthylène produit en utilisant un métallocène représente de 5 à 14 % de l'épaisseur de paroi totale.

**4.** Utilisation des tubes ou des articles creux très brillants selon l'une quelconque des revendications 1 à 3, pour la manipulation de produits alimentaires fluides.

**5.** Utilisation selon la revendication 4, pour réduire la prolifération bactérienne.

**6.** Utilisation des tubes ou des articles creux très brillants selon l'une quelconque des revendications 1 à 3, pour des tubes cosmétiques et hygiéniques.

**7.** Utilisation des tubes ou des articles creux très brillants selon l'une quelconque des revendications 1 à 3, pour des applications médicales.

**8.** Utilisation des tubes ou des articles creux très brillants selon l'une quelconque des revendications 1 à 3, pour le remplacement de tubulures en PVC.

**Figure 1.**

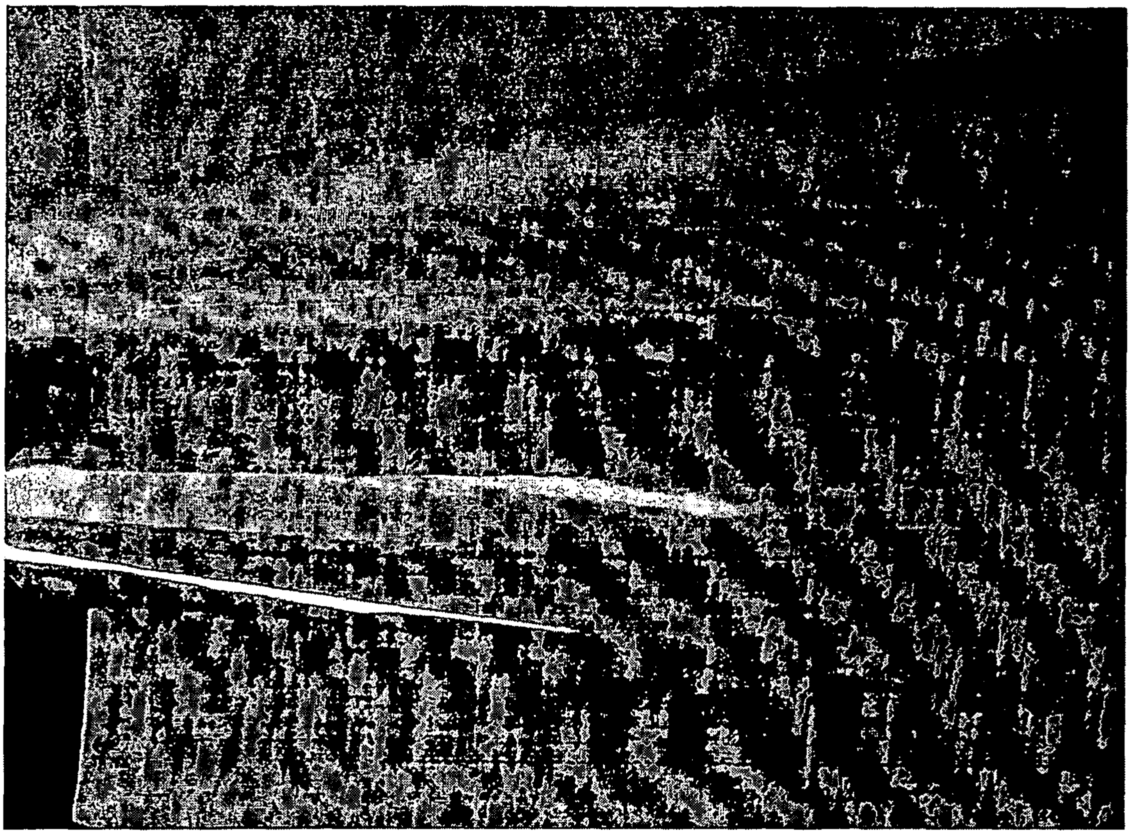

Figure 1: Lower pipe prepared with Resin R1, upper pipe prepared with resin R2.

**Figure 2.**

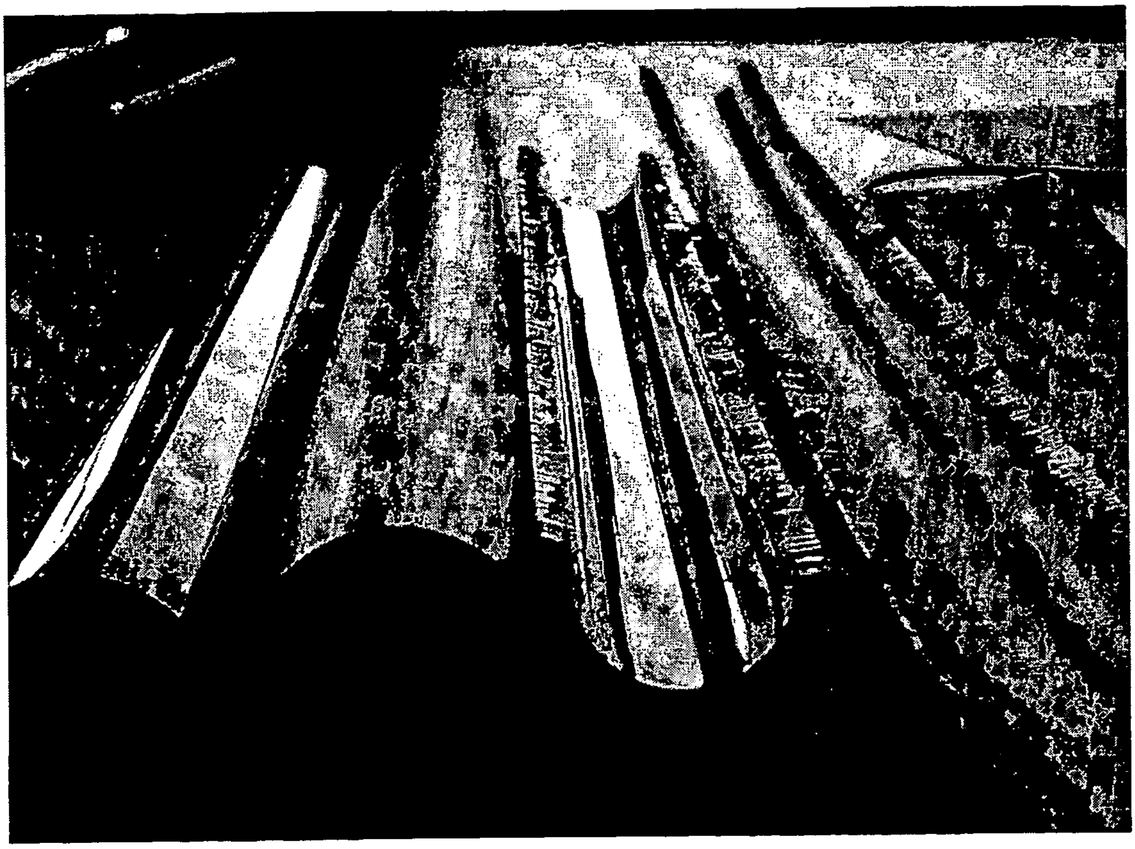

Figure 1: Glossy pipe prepared with resin R1, mat pipes prepared with resin R2.